Europäisches Patentamt

(19) European Patent Office

Office européen des brevets

(11) Publication number : **0 454 911 B1**

(12) **EUROPEAN PATENT SPECIFICATION**

(45) Date of publication of patent specification :
20.10.93 Bulletin 93/42

(51) Int. Cl.⁵ : **B21C 23/22**

(21) Application number : **90304425.3**

(22) Date of filing : **25.04.90**

(54) **A preparation process for coextrusion billets with multiple metallic cylindrical layers.**

(43) Date of publication of application :
06.11.91 Bulletin 91/45

(45) Publication of the grant of the patent :
20.10.93 Bulletin 93/42

(84) Designated Contracting States :
AT BE CH DE DK ES FR GB GR IT LI LU NL SE

(56) References cited :
BE-A- 663 036
DE-A- 1 402 797
DE-A- 1 900 322
FR-A- 2 166 108

(73) Proprietor : **TELEDYNE INDUSTRIES INC**
**1600 N.W. Old Salem Road**
**Albany, Oregon 97321 (US)**

(72) Inventor : **Wang, Chun Tsin**
**2225 Heath St., S.**
**Salem, Oregon 97302-3611 (US)**
Inventor : **Scanlon, Robert H.**
**4996 Powers Avenue**
**Albany, Oregon 97321 (US)**

(74) Representative : **Watts, Peter Graham et al**
**Anthony Cundy & Co. 384 Station Road**
**Dorridge**
**Solihull West Midlands B93 8ES (GB)**

## Description

This invention relates to an improved method of fabricating multi-layered tubing suitable for nuclear, chemical processing and other industrial applications.

## BACKGROUND OF THE INVENTION

In the conventional process for fabricating seamless tubing with multi-layered metals, coextrusion is generally applied. The extrusion billet is assembled with multiple layers of metallic cylinders one inside the other concentrically. The annular opening at each end of the assembly is sealed by vacuum welding. The billet assembly is preheated to a proper temperature and extruded, forming a metallurgical bond between adjacent layers. The bondline defects are occasionally detected at the as-extruded stage or after the tube is further reduced. The main cause for this problem is due to insufficient time at temperature to effect bonding and diffusion across the bondline during extrusion.

In the conventional process for preparation of two-layered zirconium-zirconium alloy billet, the outer zirconium alloy cylindrical part is first subjected to beta heat treatment by heating at 980 degrees C to 1200 degrees C range and water quenching in order to improve corrosion resistance and to achieve fine grain structure for the final tube product. After the billet is assembled with an inner zirconium liner, it is extruded to a tubeshell and further reduced by tube reducers to final size suitable for nuclear fuel cladding applications. A stringent inspection such as ultrasonic technique is used for bondline defects which may be as small as a few thousands of an inch in dimension.

It is, therefore, an objective of the present invention to reduce or eliminate the occurrence of bondline defects in concentric mating surface for tubing with multiple metallic layers.

It is a further objective of the present invention to promote maximum bond strength with diffusion across the interface between the inner and outer metallic layers.

## BRIEF SUMMARY OF THE INVENTION

The foregoing and further objects and advantages of the invention hereinafter described are achieved by relatively low temperature isostatic pressing of a multilayered metallic billet with or without subsequent heating at a higher temperature to promote diffusion across the interface to substantially reduce bondline defects between mating materials at their interface.

## BRIEF DESCRIPTION OF THE DRAWINGS

Figure 1 is a photomicrograph at 180x showing a typical bondline defect between the upper Zircaloy-2 and the lower zirconium materials which had been coextruded from an assembled billet by conventional process described herein, the sample being stain etched.

Figure 2 is a cross sectional view of an assembled two-layered metallic billet. The outer layer is Zircaloy-2 and the inside liner is zirconium.

Figure 3 is a photomicrograph at 180x of a stain etched diffused bondline between upper zirconium and lower Zircaloy-2 materials prepared by HIP (Hot Isostatic Pressing) and quenching according to the present invention.

Figure 4a and 4b are photomicrographs of a stain etched diffused bondline between upper zirconium and lower Zircaloy-2 materials prepared according to the present invention after the billet assembly is extruded at (a) 180x and (b) 750x.

Figures 5a and 5b are photomicrographs of non-diffused bondline between upper zirconium and lower Zircaloy-2 materials from a conventional extrusion at (a) 180x and (b) 750x.

Figures 6a and 6b are photomicrographs respectively at 750x of the same materials of 4(b) and 5(b) with the specimens etched with $HNO_3$-$HF$-$H_2O$ to show grain structure.

## DETAILED DESCRIPTION OF THE INVENTION

In the process of the present invention, the bonding at the interface between concentric cylindrical tubes is achieved by hot isostatic pressing of the billet assembly at a relative low temperature with a high pressure which are sufficient to cause bonding at the interface. The billet assembly is further heat treated at a higher temperature and ambient pressure in order to cause diffusion across the bondline, and thus further strengthen the bonding between the mating metallic layers.

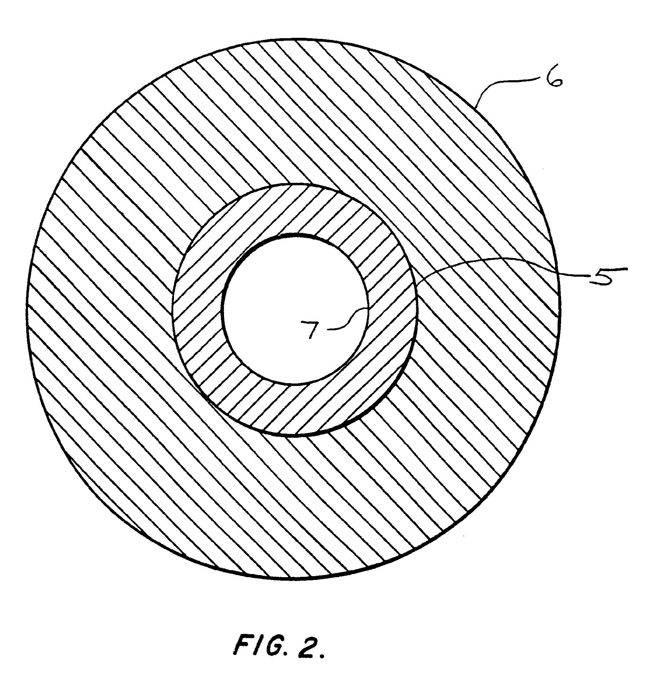

For a billet of Zircaloy (6) on the outside and zirconium (7) on the inside, as shown in Figure 2, both cylindrical parts are cleaned, assembled and vacuum welded so that there are no detectable amounts of gases or other foreign materials present between the different metallic layers. The temperature for the subsequent hot isostatic pressing ranges from 600 degrees C to 800 degrees C, and the argon pressure ranges from 1034 MPa to 3102 MPa (15,000 to 45,000 psi), as is generally commercially available in the industry. Subsequent to the HIP (Hot Isostatic Pressing) step, the billet is heated in the temperature range of from 1000 degrees C to 1200 degrees C (1832 degrees F to 2192 degrees F) for a short period of time so that diffusion occurs across the bondline, but not to allow the diffusion on a scale, which could alter the properties of the metal on either side of the bond zone. The billet is then quenched in a quenchant which is preferrably a fast cooling medium. Preferably water is selected as the quench medium although brine or other quenchant agents may be used if desired. The preheating and quenching conditions are selected to that there will also be a precipitation of fine second phase particles which serve as the nucleation sites for recrystallization, and also impart improved corrosion resistance of one or all of the metallic layers.

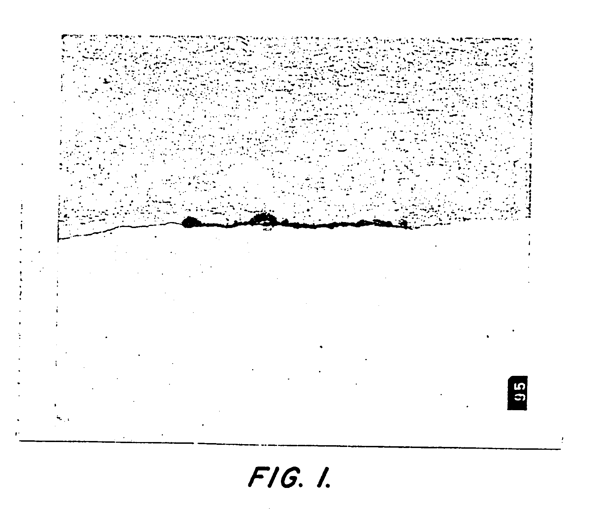

When the billet is thus prepared, and extruded or further reduced into tubing, the bondline will remain diffused, and relatively free of defects. Figure 1 shows a typical bondline defect obtained from the conventional practice described herein and is shown for comparison purposes with the product produced by the practice of the present invention.

The following examples will further clarify the process.

## EXAMPLE 1

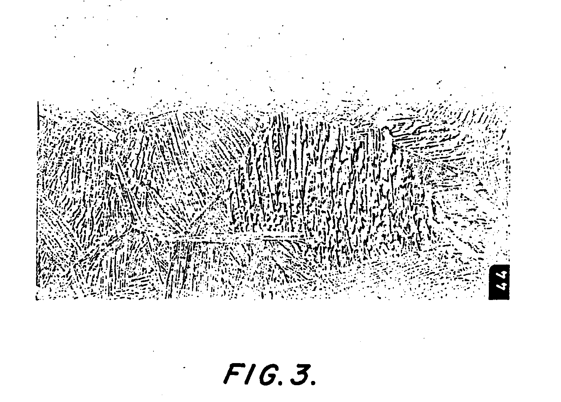

After assembling and vacuum welding, a zirconium-Zircaloy 2, (ZrI-1.5%Sn-0.2%Fe-.1Cr-.05Ni) billet, 15,24 cm (6.0") OD x 4,191 cm (1.650") ID x length (as shown in Figure 2), was treated in a hot isostatic pressing vessel, under 1034 MPa (15,000 psi) argon pressure and at 740 degrees C for 2 hours. After removing from the vessel, the billet was preheated, in an induction furnace, and held at 1150 degrees C for 3 minutes, and then quenched in 20 degrees C water. A photograph of the transformed beta microstructure at 12,7 cm (5") above the bottom end of the quenched billet, longitudinal view, is shown in Figure 3. The sample was stain etched so that Zircaloy-2 exhibited a dark grey color, while the zirconium was bright. The lack of a sharp bondline indicates that the desired degree of diffusion between the bonded components has occurred.

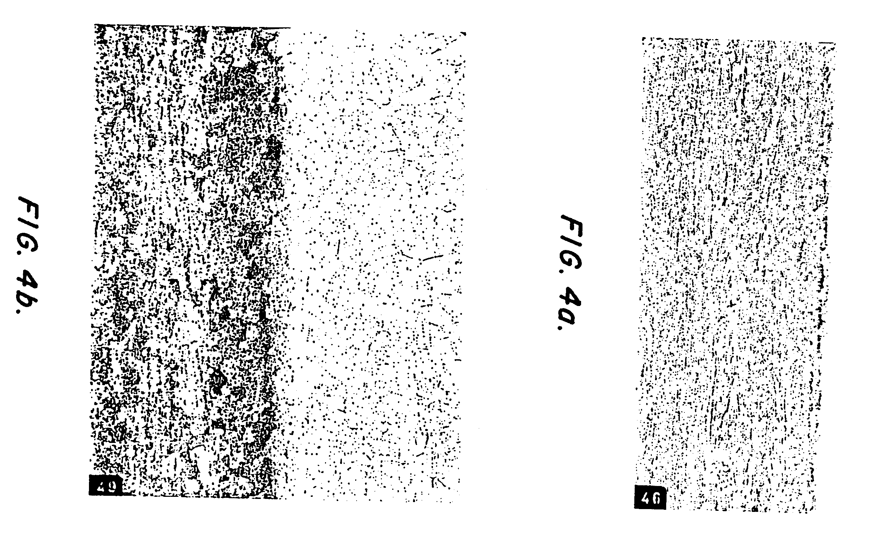

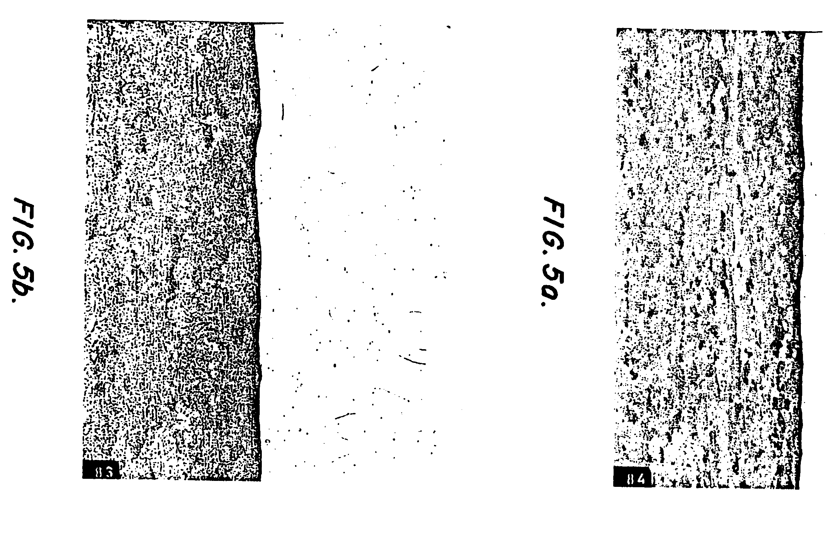

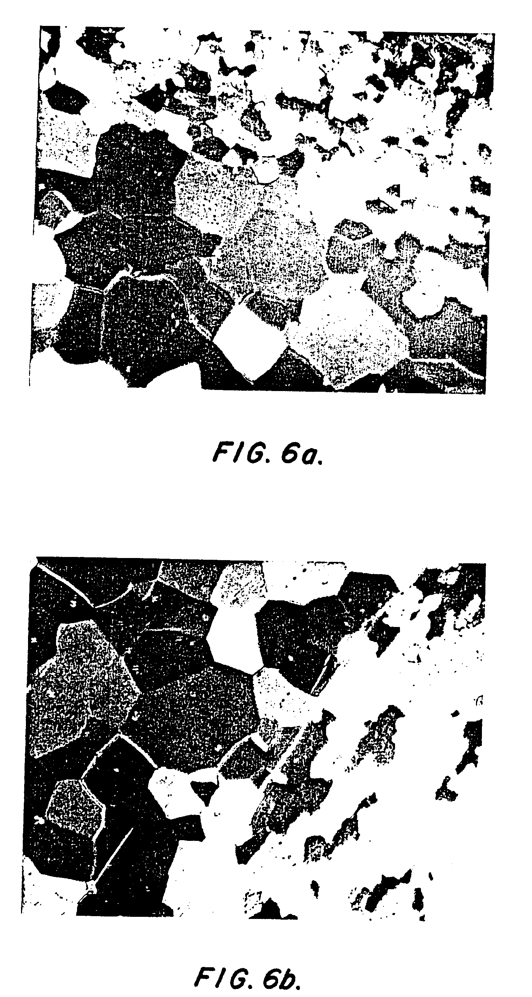

After the billet was extruded to 6,35 cm (2.5") OD x 4,191 cm (1.650") ID x length, and annealed at 663 degrees C for 2 hours, samples were taken from one end of the tube for microstructure examination. The photographs of the stain-etched specimen are shown in Figure 4, (a) and (b) at 180x and 750x, respectively. At lower (180x) magnification, the bondline between zirconium and Zircaloy-2 is visible while at higher (750x) magnification, the bondline is rather diffused. Figures 5a and 5b are photomicrographs of a bondline of a coextruded tube of the same dimensions with similar processing for billet preparation, except that no hot isostatic pressing and quenching steps were taken. It is apparent that no diffusion across the bondline occurred for this sample. Figures 6a and 6b are corresponding views of the diffused and non-diffused bondlines showing the difference in grain structure present in the vicinity of the bondlines.

In a pure zirconium liner, the contents of oxygen, Sn, Fe, Cr, and Ni are generally low as compared to Zircaloys, which renders its high ductility and its high resistance to iodine induced stress corrosion cracking in nuclear reactor applications. Sampling of a billet consisting of a zircaloy-2 outer layer and a Zr liner, which was processed as mentioned in the example, showed that the diffusion of any of the elements mentioned above was limited to 3.74% of the liner thickness (Table 1). The experiment indicated that the desirable properties of zirconium described were essentially not affected by the HIP and beta quench process, and, thus the zirconium treated in this manner can serve as well as a conventional tube liner in a nuclear reactor environment.

## EXAMPLE 2

An assembled and vacuum welded Zr-2.5%Nb/Zircaloy 4 (Zr-.15Sn-.2Fe-.1Cr) billet, 15,24 cm (6.0") OD x 4,191 cm (1.650") ID x length, was first hot isostatic pressed under a pressure of 1034 MPa (15,000 psi) argon, and at a temperature of 615 degrees C for 3 hours. The treated billet was then preheated and held at 1150 degrees C for 3 minutes and quenched into 20 degrees C water. The billet was then extruded at 650 degrees C to 6,35 cm (2.5") OD x 4,191 cm (1.650") ID x length. The diffused bondline is similar to that described in Example 1.

The present invention has been described in its preferred embodiment. It will be appreciated, however, that the advantages obtained can be achieved with a wide variety of material sizes utilizing the teachings contained herein. The invention described therefore is intended to be limited only by the scope of the appended claims in view of the pertinent prior art.

## Table 1

Chemical Analysis for Zr Liner of a Billet With
Zircaloy-2 Outer Component
(Liner Dimensions:   2.720" OD x 1.650" ID x L)

| ID, in. | | Sn | Cr | Fe | Ni | O |
|---|---|---|---|---|---|---|
| From | To | | | | | |
| 1.650 | 2.000 | <10 | <50 | 230 | <35 | |
| 2.000 | 2.480 | <10 | <50 | 235 | <35 | 420 |
| 2.480 | 2.520 | <10 | <50 | 225 | <35 | |
| 2.520 | 2.560 | <10 | <50 | 235 | <35 | |
| 2.560 | 2.600 | <10 | <50 | 225 | <35 | 470 |
| 2.600 | 2.640 | <10 | <50 | 230 | <35 | |
| 2.640 | 2.680 | <10 | <50 | 220 | <35 | |
| 2.680 | 2.720 | <10 | <50 | 375 | 120(1) | 570 |

(1)  Calculation of observed maximum diffusion distance for
alloying elements and oxygen:

$(2.720"-2.680")/2 = .020"$
Total liner thickness $= (2.720"-1.650")/2 = .535"$

$$\text{Thickness ratio} = \frac{.020"}{.535"} = 3.74\%$$

1 inch = 2,54 cm

## Claims

1.  A process for fabricating unitary seamless tubular articles comprising at least two concentric metallic layers, by fitting at least two concentric cylindric parts together to form an extrusion billet assembly comprising the following steps:
    treating the billet assembly by hot isostatic pressing under sufficient pressure and proper temperature to form a bond between the metallic layers; and
    heating said billet at a high enough temperature for a sufficient period of time to promote diffusion across the bondline whereby the bonding strength is increased and the occurrence of bondline defects in the finished tubing are reduced.

2.  The process of claim 1 wherein the billet consists of at least one of the cylindrical parts is zirconium or zirconium alloy.

3.  The process of claim 1 wherein the step of hot isostatic pressing at a pressure in the range of from about 1034 MPa to about 3102 MPa (15,000 to about 45,000 psi).

4.  The process of claim 3 wherein the hot isostatic pressing is conducted in the temperature range of from about 450 degrees C to about 1250 degrees C.

5. The process of claim 2 or 3 wherein said article after pressing is heated to a temperature in the range of from 450 degrees C to about 1250 degrees C.

6. The process of claim 5 wherein said article, after the step of heating, is quenched by immersion in a quenchant maintained at a temperature in the range of from about 0 degrees C to about 100 degrees C.


**Patentansprüche**

1. Verfahren zur Herstellung einheitlicher nahtloser rohrförmiger Gegenstände, die wenigstens zwei konzentrische metallische Schichten aufweisen, durch Einpassen von wenigstens zwei konzentrischen Teilen ineinander, um eine Preßblock-Baugruppe zu bilden, das die folgenden Stufen umfaßt:
   - Behandeln der Preßblock-Baugruppe durch heißisostatisches Pressen unter einem ausreichenden Druck und bei einer geeigneten Temperatur, um eine Bindung zwischen den metallischen Schichten auszubilden; und
   - Erhitzen des Preßblocks für einen ausreichenden Zeitraum auf eine Temperatur, die hoch genug ist, eine Diffusion quer zu der Bindungslinie zu fördern, wodurch die Bindungsstärke erhöht wird und das Auftreten von Bindungslinien-Fehlern in dem fertigen Rohr vermindert wird.

2. Verfahren nach Anspruch 1, bei dem wenigstens eines der den Preßblock bildenden zylindrischen Teile aus Zirconium oder einer Zirconium-Legierung besteht.

3. Verfahren nach Anspruch 1, bei dem die Stufe des heißisostatischen Pressens bei einem Druck im Bereich von etwa 1034 MPa bis etwa 3102 MPa (15,000 bis etwa 45,000 psi) erfolgt.

4. Verfahren nach Anspruch 3, bei dem das heißisostatische Pressen im Temperaturbereich von etwa 450 °C bis etwa 1250 °C durchgeführt wird.

5. Verfahren nach Anspruch 2 oder 3, bei dem der genannte Gegenstand nach dem Pressen auf eine Temperatur im Bereich von 450 °C bis etwa 1250 °C erhitzt wird.

6. Verfahren nach Anspruch 5, bei dem der Gegenstand, nach der Erhitzungsstufe, durch Eintauchen in ein Abschreckmedium abgeschreckt wird, das auf einer Temperatur im Bereich von etwa 0 °C bis etwa 100 °C gehalten wird.


**Revendications**

1. Procédé de fabrication d'articles unitaires tubulaires sans soudure comprenant au moins deux couches métalliques concentriques, dans lequel on emmanche l'une dans l'autre au moins deux pièces cylindriques concentriques pour former un ensemble formant billette d'extrusion , comprenant les étapes suivantes :
   - un traitement de compression isostatique à chaud de l'ensemble formant billette sous une pression suffisante et à une température convenable pour former une liaison entre les couches métalliques ; et
   - un chauffage de ladite billette à une température suffisamment élevée pendant une période de temps suffisante pour favoriser une diffusion à travers la ligne de liaison par laquelle la force de liaison est augmentée et la présence de défauts sur la ligne de liaison dans le tube fini est réduite.

2. Procédé selon la revendication 1, dans lequel la billette consiste en au moins une des parties cylindriques qui est en zirconium ou en alliage de zirconium.

3. Procédé selon la revendication 1, dans lequel l'étape de compression isostatique à chaud est réalisée à une pression comprise entre environ 1034 MPa et environ 3102 MPa (15000 psi et environ 45000 psi) .

4. Procédé selon la revendication 3, dans lequel la compression isostatique à chaud est conduite à une température comprise entre environ 450 degrés C et environ 1250 degrés C.

5. Procédé selon la revendication 2 ou 3, dans lequel ledit article est chauffé après compression à une température comprise entre 450 degrés C et environ 1250 degrés C.

6. Procédé selon la revendication 5, dans lequel ledit article , après l'étape de chauffage, est trempé par immersion dans un milieu de trempe maintenu à une température comprise entre environ 0 degrés C et environ 100 degrés C.

FIG. 1.

FIG. 2.

FIG. 3.

FIG. 4a.

FIG. 4b.

FIG. 5a.

FIG. 5b.

FIG. 6a.

FIG. 6b.